# EUROPEAN PATENT SPECIFICATION

(11) **EP 1 963 391 B1**
(45) Date of publication and mention of the grant of the patent: **26.02.2014**
(21) Application number: 06837433.9
(22) Date of filing: 13.11.2006
(51) Int. Cl.: C08G 18/28, C08G 18/78, C09D 175/04

(54) **LOW SURFACE ENERGY, ETHYLENICALLY UNSATURATED POLYISOCYANATE ADDITION COMPOUNDS AND THEIR USE IN COATING COMPOSITIONS**
ETHYLENISCH UNGESÄTTIGTE POLYISOCYANATZUSATZVERBINDUNGEN MIT GERINGER OBERFLÄCHENENERGIE UND IHRE VERWENDUNG FÜR BESCHICHTUNGSZUSAMMENSETZUNGEN
COMPOSES D'ADDITION A BASE DE POLYISOCYANATE A INSATURATION ETHYLENIQUE ET A FAIBLE TENSION SUPERFICIELLE ET LEUR UTILISATION DANS DES COMPOSITIONS DE REVETEMENT

(30) Priority: 17.11.2005 US 281232
(43) Date of publication of application: 03.09.2008
(73) Proprietor: Bayer MaterialScience LLC, Pittsburgh, PA 15205-9741 (US)
(72) Inventor: ROESLER, Richard, R., Wexford, PA 15090-7583 (US); GARRETT, James, T., Palmyra, VA 22963 (US); LOCKHART, Aaron, Pittsburgh, PA 15235 (US); KINNEY, Carol, L., Eighty Four, PA 15330-0583 (US)
(74) Representative: Feldhues, Michael L.F.
(86) International application number: PCT/US2006/043977
(87) International publication number: WO 2007/061663

(56) References cited:
- EP-A- 1 391 492
- EP-A- 1 564 233
- WO-A-02/10244
- US-A- 5 691 439

## Description

### BACKGROUND OF THE INVENTION

### Field of the Invention

The present invention is directed to low surface energy polyisocyanate addition compounds which contain ethylenically unsaturated groups, urethane groups and siloxane groups and to their use in coating compositions curable by free radical polymerization.

### Description of the Prior Art

Polyisocyanate addition compounds, which contain ethylenically unsaturated groups, are prepared by the reaction of polyisocyanates with isocyanate-reactive compounds containing ethylenically unsaturated groups, and cure by free radical polymerization, are well known.

Although coatings prepared from these compositions possess many valuable properties, one property, in particular, which needs to be improved is the surface quality. It can be difficult to formulate coating compositions to obtain a coating having a smooth surface as opposed to one containing surface deflects such as craters, etc.

It is believed that these difficulties are related to the high surface tension of the polyisocyanate addition compounds. Another problem caused by the high surface tension is the difficulty in cleaning the coatings. Regardless of their potential application area, there is a high likelihood that the coatings will be subjected to stains, graffiti, etc.

The incorporation of either fluorine or siloxane groups into polyisocyanates via allophanate groups in order to reduce the surface tension of the polyisocyanates and the surface energy of the resulting polyurethane coatings is disclosed in U.S. Patents 5,541,281; 5,574,122; 5,576,411; 5,646,227; 5,691,439; and 5,747,629. During the cure of one-component and two-component coating compositions containing these polyisocyanates, which is relatively slow at room temperature and even at elevated temperatures, the polyisocyanate molecules containing fluorine or siloxane groups rise to the surface of the coating before being locked into position by urethane formation resulting in a low surface energy.

Polyisocyanate addition compounds containing ethylenically unsaturated groups and siloxane groups are disclosed in U.S. Patents 6,495,651, 5,986,018, and 5,556,929; EP-A 937,998; Japanese Patent Nos. 09087338-A2 and 2934782-B2 and 601011007-A2; Ryabov et al, Vysokomolekulyarnye Soedineniya, Seriya A i Seriya B (2001), 43(2), 204-210; and Verkhunov et al, Plasticheskie Massy (1997), (1), 31-33. All of these references describe the preparation of polyaddition compounds from diisocyanate monomers. Polyisocyanate addition compounds containing ethylenically unsaturated groups and siloxane groups are also disclosed in Japanese Patent No. 60101107-A2. In this reference the polyisocyanate addition products were prepared from polyisocyanates adducts containing urethane groups.

It is an object of the present invention to provide polyisocyanate addition compounds which have reduced surface tension and, thus, are suitable for the production of coatings which have lower surface energies, improved surfaces and improved cleanability and which also possess the other valuable properties of the known coatings prepared from ethylenically unsaturated compounds.

These objectives may be achieved with the polyisocyanate addition compounds of the present invention containing ethylenically unsaturated groups, urethane groups and siloxane groups which are described hereinafter. It is surprising that coatings obtained from these polyisocyanates have low surface energies. Because of the rapid cure that these coatings undergo during free radical polymerization, it would be expected that the siloxane-containing molecules would be trapped bellow the surface and, thus, would not be able to provide coatings having low surface energies.

### SUMMARY OF THE INVENTION

The present invention is directed to polyisocyanate addition compounds which
i) are substantially free from isocyanate groups and are prepared from one or more a) polyisocyanate adducts containing isocyanurate, uretdione, biuret, allophanate, iminooxadiazine dione carbodiimide and/or oxadiazinetrione groups and/or b) NCO prepolymers,
ii) contain urethane groups,
iii) contain siloxane groups (calculated as SiO, MW 44) in an amount of 0.002 to 50% by weight, and
iv) contain ethylenically unsaturated groups (calculated as C=C, MW 24) in an amount of 2 to 40% by weight,
wherein the preceding percentages are based on the solids content of the polyisocyanate addition compounds and wherein the siloxane groups are incorporated by reacting an isocyanate group with a compound containing one or more hydroxyl groups directly attached to a carbon atom and one or more siloxane groups to form urethane groups and optionally allophanate groups, provided that more than 50 mole % of the groups that chemically incorporate siloxane groups into the polyisocyanate addition compounds are urethane groups.

The present invention also relates to the use of the polyisocyanate addition compounds in coating compositions curable by free radical polymerization.

### DETAILED DESCRIPTION OF THE INVENTION

In accordance with the present invention the term "(cyclo)aliphatically bound isocyanate groups" means aliphatically and/or cycloaliphatically bound isocyanate groups.

Examples of suitable polyisocyanates which may be used as the polyisocyanate component to prepare the polyisocyanate addition compounds include a) polyisocyanate adducts containing isocyanurate, uretdione, biuret, allophanate, iminooxadiazine dione carbodiimide and/or oxadiazinetrione groups and b) NCO prepolymers having an average functionality of 1.5 to 6, preferably 1.8 to 6, more preferably 2 to 6 and most preferably 2 to 4. Polyisocyanate adducts are preferred.

The polyisocyanates adducts preferably have an average functionality of 2 to 6, more preferably 2 to 4, and an NCO content of 5 to 30% by weight, preferably 10 to 25% by weight and more preferably 15 to 25% by weight, and include:
1) Isocyanurate group-containing polyisocyanates which may be prepared as set forth in DE-PS 2,616,416. EP-OS 3,765, EP-OS 10,589. EP-OS 47,452, US-PS 4,288,586 and US-PS 4,324,879.
2) Uretdione diisocyanates which may be prepared by oligomerizing a portion of the isocyanate groups of a diisocyanate In the presence of a suitable catalyst, e.g., a trialkyl phosphine catalyst, and which may be used in admixture with other aliphatic and/or cycloaliphatic polyisocyanates, particularly the isocyanurate group-containing polyisocyanates set forth under (1) above.
3) Biuret group-containing polyisocyanates which may be prepared according to the processes disclosed in U.S. Patent Nos. 3,124,605; 3,358,010; 3,644,490; 3,862,973; 3,903,126; 3,903,127; 4,051,165; 4,147,714; or 4,220,749 by using co-reactants such as water, tertiary alcohols, primary and secondary monoamines, and primary and/or secondary diamines.
4) Allophanate group-containing polyisocyanates which may be prepared according to the processes disclosed in U.S. Patent Nos. 3,769,318, 4,160,080, 4,177,342, and 6,392,011. Preferred catalysts for the preparation of these polyisocyanates include organic tin(II) salts such as tin(II) octoate.
5) Isocyanurate and allophanate group-containing polyisocyanates which may be prepared in accordance with the processes set forth in U.S. Patents 5,124,427, 5,208,334, 5,235,018 and 5,444,146, the disclosures of which are herein incorporated by reference, preferably polyisocyanates containing these groups in a ratio of monoisocyanurate groups to monoallophanate groups of about 10:1 to 1:10, preferably about 5:1 to 1:7.
6) lminooxadiazine dione and optionally isocyanurate group-containing polylsocyanates which may be prepared in the presence of special fluorine-containing catalysts as described in DE-A 19611849.
7) Carbodiimide group-containing polyisocyanates which may be prepared by oligomerizing di- or polyisocyanates in the presence of known carbodiimidization catalysts as described in DE-PS 1,092,007, US-PS 3,152,152 and DE-OS 2,504,400, 2,537,685 and 2,552,350.
8) Polyisocyanates containing oxadiazinetrione groups, e.g., the reaction product of two moles of a diisocyanate and one mole of carbon dioxide.

Preferred polyisocyanate adducts are those containing isocyanurate, uretdione, biuret, allophanate and/or iminooxadiazine dione groups, especially polyisocyanates containing isocyanurate groups and optionally uretdione, iminooxadiazine dione or allophanate groups.

Suitable monomeric diisocyanates for preparing the polyisocyanate adducts may be represented by the formula

R(NCO)₂

in which R represents an organic group obtained by removing the isocyanate groups from an organic diisocyanate having a molecular weight of about 140 to 400. Preferred diisocyanates for the process according to the invention are those represented by the above formula in which R represents a divalent aliphatic hydrocarbon group having 4 to 18 carbon atoms, a divalent cycloaliphatic hydrocarbon group having 5 to 15 carbon atoms, a divalent araliphatic hydrocarbon group having 7 to 15 carbon atoms or a divalent aromatic hydrocarbon group having 6 to 15 carbon atoms.

Examples of suitable organic diisocyanates include 1,4-tetramethylene diisocyanate, 1,6-hexamethylene diisocyanate, 2,2,4-trimethyl-1,6-hexamethylene diisocyanate, 1,12-dodecamethylene diisocyanate, cyclohexane-1,3- and -1,4-diisocyanate, 1-isocyanato-2-isocyanatomethyl cyclopentane, 1-isocyanato-3-isocyanatomethyl-3,5,5-trimethyl-cyclohexane (isophorone diisocyanate or IPDI), bis-(4-iso-cyanatocyclohexyl)-methane, 2,4'-dicyclohexyl-methane diisocyanate, 1,3-and 1,4-bis-(isocyanatomethyl)-cyclohexane, bis-(4-isocyanato-3-methylcyclohexyl)-methane, α,α,α',α'-tetramethyl-1,3- and/or -1,4-xylylene diisocyanate, 1-isocyanato-1-methyl-4(3)-isocyanatomethyl cyclohexane, 2,4- and/or 2,6-hexahydrotoluylene diisocyanate; 1,3- and/or 1,4-phenylene diisocyanate, 2,4- and/or 2,6-toluylene diisocyanate, 2,4-and/or 4,4'-diphenyl-methane diisocyanate, 1.5-diisocyanato naphthalene and mixtures thereof.

Monomeric polyisocyanates containing 3 or more isocyanate groups such as 4-isocyanatomethyl-1,8-octamethylene diisocyanate and aromatic polyisocyanates such as 4,4',4"-triphenylmethane diisocyanate and polyphenyl polymethylene polyisocyanates obtained by phosgenating aniline/formaldehyde condensates may also be used.

Preferred organic diisocyanates include 1.6-hexamethylene diisocyanate, 1-isocyanato-3-isocyanatomethy-3,5,5-trimethylcyclohexane-(isophorone diisocyanate or IPDI), bis-(4-isocyanato-cyclohexyl)-methane, α,α,α',α'-tetramethyl-1,3- and/or -1,4-xylylene diisocyanate, 2,4- and/or 2,6-toluylene diisocyanate, and 2,4- and/or 4,4'-diphenylmethane diisocyanate.

The NCO prepolymers, which may also be used as the polyisocyanate component to prepare the polyisocyanate addition compounds, are prepared from the previously described monomeric polyisocyanates or polyisocyanate adducts, preferably monomeric diisocyanates, and organic compounds containing at least two isocyanate-reactive groups, preferably at least two hydroxyl groups. These organic compounds include high molecular weight compounds having molecular weights of 600 to about 6,000, preferably 800 to about 3,000, and optionally low molecular weight compounds with molecular weights below 600. The molecular weights are number average molecular weights (Mₙ) and are determined by end group analysis (OH and/or NH number). Products obtained by reacting polyisocyanates exclusively with low molecular weight compounds are polyisocyanates adducts containing urethane groups and are not considered to be NCO prepolymers.

Examples of the high molecular weight-compounds are polyester polyols, polyether polyols, polyhydroxy polycarbonates, polyhydroxy polyacetals, polyhydroxy polyacrylates, polyhydroxy polyester amides and polyhydroxy polythioethers. The polyester polyols, polyether polyols and polyhydroxy polycarbonates are preferred, while the polyester polyols and polyhydroxy polycarbonates are more preferred.

Further details concerning the low molecular weight compounds and the starting materials and methods for preparing the high molecular weight polyhydroxy compounds are disclosed in U.S. Patent 4,701,480, herein incorporated by reference.

Other examples include the known high molecular weight amine-functional compounds, which may be prepared by converting the terminal hydroxy groups of the polyols previously described to amino groups, and the high molecular weight polyaspartates and polyaldimines disclosed in U.S. Patents 5,243,012 and 5,466,771, respectively, herein incorporate by reference. A particular advantage for the use of polyaspartates to prepare the isocyanate addition products is that during the subsequent curing of these products the urea groups react to form thermally stable hydantoin groups.

The NCO prepolymers generally have an isocyanate content of 0.4 to 20% by weight, preferably 0.4 to 15% by weight and more preferably by to 10.0% by weight. The NCO prepolymers are prepared in known manner by the reaction of the above mentioned starting materials at a temperature of 40 to 120°C, preferably 50 to 100°C and at an NCO/OH (and/or NH) equivalent ratio of about 1.3:1 to 20:1 preferably about 1.4:1 to 10:1. If chain extension via urethane groups is desired during the preparation of the NCO prepolymers, an NCO/OH equivalent ratio of 1.3:1 to 2:1 is selected. If chain extension is not desired, an excess of diisocyanate is preferably used, corresponding to an NCO/OH equivalent ratio of 4:1 to 20:1, preferably 5:1 to 10:1. The excess diisocyanate (and any volatile solvent used during the preparation) may optionally be removed by thin layer distillation when the reaction is completed. In accordance with the present invention NCO prepolymers also include NCO semi-prepolymers which contain unreacted starting polyisocyanates in addition to the urethane group-containing prepolymers.

In accordance with the present invention urethane groups are incorporated into the polyisocyanate addition compounds by the use of compounds containing one or more (preferably one or two and more preferably one) hydroxyl groups directly attached to carbon atoms, and one or more siloxane groups, preferably in the form of dimethyl siloxane groups, -Si(CH₃)₂O-.

Examples of these compounds are those corresponding to the formula

HO-R¹-X-[Si(R²)₂O-]ₙ-[Si(R²)₂-X]ₘ-R¹-Y

wherein
- R¹: independently of each other represent an optionally inertly substituted, divalent hydrocarbon radical, preferably an alkylene radical (such as methylene, ethylene, propylene or butylene) or a polyoxyalkylene group (such as a polyoxyethylene or polyoxypropylene group),
- R²: independently of each other represents hydrogen or an optionally inertly substituted lower alkyl, phenyl or benzyl group, preferably methyl or ethyl and more preferable methyl,
- X: independently of each other represents a linkage between an R¹ group and a Si atom, e.g., a covalent bond, -O- or -COO-,
- Y: represents hydrogen or OH,
- m: is 0 or 1 and
- n: is an integer from 1 to 1,000, preferably 2 to 100 and more preferably 4 to 15.

Inert substituents are those that do not interfere with the reaction of the siloxane compound with the polyisocyanate or the allophanatization reaction of the isocyanate groups. Examples include halogen atoms such as fluorine.

Examples of compounds containing one isocyanate-reactive group in which R¹ represents an oxyalkylene group are compounds corresponding to the formula

HO(-CHR³-CH₂O-)ₒ-(R⁴)ₘ-[Si(R²)₂O-]ₙ-[Si(R²)₂-X']ₘ-R⁴-H

and examples of compounds containing more than one isocyanate-reactive group in which R¹ represents an oxyalkylene group are compounds corresponding to the formula

HO(-CHR³-CH₂O-)ₒ-(R⁴)ₘ-[Si(R²)₂O-]ₙ-(CH₂-CHR₃-O-)ₚ-CH₂-CHR³-OH

wherein
- R², m and n: are as defined above,
- R³: independently of each other represents hydrogen or an alkyl group having 1 to 12 carbon atoms, preferably hydrogen or methyl,
- R⁴: independently of each other represents an optionally inertly substituted, divalent hydrocarbon radical, preferably an alkylene radical (such as methylene, ethylene, propylene or butylene),
- X': represents a linkage between an R⁴ group and a Si atom, e.g., a covalent bond, -0- or -COO-,
- o: is an integer from 1 to 200, preferably 2 to 50 and more preferably 4 to 25 and
- p: is an integer from 0 to 200, preferably 2 to 50 and more preferably 4 to 25.

These siloxane compounds are prepared by reacting the appropriate siloxane with an amount of an alkylene oxide (preferably ethylene or propylene oxide) sufficient to prepare a compound having the desired siloxane content.

Other suitable siloxane containing compounds maybe linear, branched or cyclic and have a molecular weight (number average molecular weight as determined by gel permeation chromatography using polystyrene as standard) of up to 50,000, preferably up to 10,000, more preferably up to 6000 and most preferably up to 2000. These compounds generally have OH numbers of greater than 5, preferably greater than 25 and more preferably greater than 35. Compounds of this type are disclosed in "Silicon Compounds", 5th Edition, which is available from Hüls America, Inc.

In the polyisocyanate addition compounds according to the invention the minimum ratio of siloxane-containing compounds to polyisocyanate is about 0.01 millimoles, preferably about 0.1 millimoles and more preferable about 1 millimole of siloxane-containing compounds for each mole of polyisocyanate. The maximum amount of siloxane-containing compounds to polyisocyanate is abut 500 millimoles, preferably about 100 millimoles and more preferably about 20 millimoles of siloxane-containing compounds for each mole of polyisocyanate. The amount of siloxane is selected such that the resulting polyisocyanate addition compound contains a minimum of 0.002% by weight, preferably 0.02% by weight and more preferably 0.2% by weight of siloxane groups (calculated as SiO, MW 44), based on solids, and a maximum of 50% by weight, preferably 10% by weight, more preferably 7% by weight and most preferably 3% by weight of siloxane groups, based on solids.

Suitable isocyanate-reactive compounds containing ethylenically unsaturated groups for preparing the polyisocyanate addition compounds of the present invention are impounds containing 1 to 3, preferably 1 to 2 and more preferably 1 isocyanate-reactive group, preferably hydroxyl or amino groups and more preferably hydroxyl groups; and 1 to 3, preferably 1 ethylenically unsaturated group.

Examples of these ethylenically unsaturated compounds include the hydroxyalkyl acrylates and methacrylates corresponding to the formula:

CH₂=CR¹-C(O)O-R²-OH

wherein R¹ is hydrogen or methyl and R² is a linear or branched alkylene group having 2 to 10 carbon atoms, preferably 2 to 4 carbon atoms. Examples of suitable hydroxyalkyl (meth)acrylates include 2-hydroxyethyl acrylate, 2-hydroxypropyl acrylate, 3-hydroxypropyl acrylate, 2-hydroxybutyl acrylate, 4-hydroxybutyl acrylate, 3-hydroxypentyl acrylate, 6-hydroxynonyl acrylate, 2-hydroxyethyl methacrylate, 2-hydroxy-propyl methacrylate, 3-hydroxypropyl methacrylate, 2-hydroxybutyl methacrylate, 2-hydroxypentyl methacrylate, 5-hydroxypentyl methacrylate, 7-hydroxyheptyl methacrylate and 5-hydroxydecyl methacrylate.

Other suitable ethylenically unsaturated compounds include the alkoxylation products of the preceding hydroxyalkyl (meth)acrylates, preferably with propylene or ethylene oxide; reaction products of hydroxyalkyl (meth)acrylates with lactones such as ε-caprolactone; reaction products of acrylic and/or methacrylic acid, preferably acrylic acid, with glycidyl acrylate, glycidyl methacrylate, glyridyl cinnamate, glycidyl crotonate, glycidyl allyl ether, glycidyl cinnamyl ether and/or glycidyl crotyl ether, preferably glycidyl methacrylate; reaction products of (meth)acrylic acid with excess quantities of higher functional saturated alcohols such as glycerol diacrylate, trimethylol propane diacrylate and pentaerythritol triacrylate and the corresponding methacrylates; β,γ-ethylenically unsaturated ether alcohols, preferably having 5 to 14 carbon atoms and containing at least one, preferably at least two, β,γ-ethylenically unsaturated ether groups, such as allyl alcohol, glycerol diallyl ether, trimethylol propane diallyl ether and pentaerythritol triallyl ether; hydroxyalkyl vinyl ethers such as 2-hydroxyethyl vinyl ether, and 4-hydroxybutyl vinyl ether, 3-hydroxy-1,4-pentadiene and-3-hydroxy-3-ethenyl-1,4-pentadiene; reaction products of (meth)acrylic acids with monoepoxide compounds; 4-hydroxy styrene; 4-(hydroxymethyl) styrene; and hydroxy-functional, ethylenically unsaturated compounds containing at least two hydroxyl groups such as trimethylol propane monoacrylate and monoallyl ether, glycerol mono-acrylate and monoallyl ether and pentaerythritol diacrylate and diallyl ether.

The polyisocyanate addition compounds are prepared by reacting the polyisocyanates with the hydroxyl compounds containing siloxane groups to form urethane groups. The resulting products are then reacted with the isocyanate-reactive compounds containing ethylenically unsaturated groups until substantially all of the isocyanate groups have been reacted. It is also possible to react the compounds containing ethylenically unsaturated groups with the polyisocyanates before the hydroxyl compounds containing siloxane groups are reacted, or both of these compounds can be reacted with the polyisocyanates simultaneously.

Suitable methods for preparing the polyisocyanate mixtures containing urethane groups are known. The urethanization reaction may be conducted at a temperature of 40 to 140°C, preferably 60 to 90°C and more preferably 70 to 80°C, in the presence of a known urethane catalyst, such as an organometallic salt or a tertiary amine. The reaction maybe terminated by reducing the reaction temperature, by removing the catalyst, e.g., by applying a vacuum, or by the addition of a catalyst poisson. After the reaction is terminated, any volatile, unreacted monomeric polyisocyanates may be removed, e.g., by thin film evaporation, but this is not necessary because the isocyanate groups present in the resulting products will subsequently be reacted with the isocyanate-reactive compounds containing ethylenically unsaturated groups or with the hydroxyl compounds containing siloxane groups.

The urethanization reaction may be carried out in the absence or in the presence of solvents which are inert to isocyanate groups, preferably in the absence pf solvents, especially when liquid starting materials are used. Depending on the area of application of the products according to the invention, low to medium-boiling solvents or high-boiling-solvents can be used. Suitable solvents include Esters such as ethyl acetate or butyl acetate; ketones such as acetone or butanone; aromatic compounds such as toluene or xylene; halogenated hydrocarbons such as methylene chloride and trichloroethylene; ethers such as diisopropylether, and alkanes such as cyclohexane, petroleum ether or ligroin.

The process according to the invention may take place either batchwise or continuously, for example, as described below. The starting polyisocyanate is introduced with the exclusion of moisture and optionally with an inert gas into a suitable stirred vessel or tube and optionally mixed with a solvent which is inert to isocyanate groups such as toluene, butyl acetate, diisopropylether or cyclohexane. In a preferred embodiment of the present invention the previously described compounds containing hydroxyl and siloxane groups are reacted with the polyisocyanates before the isocyanate-reactive compounds containing ethylenically unsaturated groups. The compounds containing hydroxyl and siloxane groups maybe introduced into the reaction vessel in accordance with several embodiments. They may be mixed with the starting polyisocyanate and introduced into the reaction vessel; they may be separately added to the reaction vessel either before or after, preferably after, the polyisocyanates are added; or the catalyst may be dissolved in these compounds prior to introducing the solution into the reaction vessel.

The progress of the reaction is followed by determining the NCO content by a suitable method such as titration, refractive Index or IR analysis. Thus, the reaction may be terminated at the desired degree of urethanization, preferably at the theoretical NCO content.

The intermediate products are polyisocyanates containing urethane groups and siloxane groups. These polyisocyanates have an average functionality of 1.5 to 6, preferably 2 to 6, and more preferably 2 to 4; and an NCO content of 1 to 30% by weight, preferably 1 to 25% by weight and more preferably 5 to 25% by weight, based on the solids content of the polyisocyanates containing urethane groups and siloxane groups.

The reaction between the polyisocyanates containing urethane groups and siloxane groups and the isocyanate-reactive compounds containing ethylenically unsaturated groups may be carried out by adding the reactants and optionally an inhibitor to the reaction vessel in any order. The amounts of the reactants are selected such that the number of isocyanate groups of the polyisocyanate to the number of isocyanate-reactive groups of the ethylenically unsaturated compound is essentially equivalent, i.e., the NCO:OH+NH equivalent ratio is 1.10:1 to 1:1.10, preferably 1.05:1 to 1:1.05 and more preferably 1.02:1 to 1:1.02. After the reactants have been added a catalytic amount of a urethane catalyst, e.g., dibutyl tin dilaurate, is added and the mixture is typically heated to a temperature of about 40 to 90°C, preferably about 60°C. During the initial reaction exotherm the temperature is maintained bellow 90°C. After the reaction mixture cools the temperature is maintained between 60°C and 70°C until the isocyanate content is <0.5% by weight as measured for example by titration with dibutyl amine. If the isocyanate content is too high, an additional amount of an isocyanate-reactive compound can be added to react with any remaining isocyanate groups. Thereafter, the product is cooled prior to storage.

Alternatively, one of the reactants can be added with the other additives and then the other reactant can be added. When the isocyanate component is added first, it is possible to initially add less than the total quantity of the isocyanate-reactive component. After the reaction is essentially complete, the isocyanate content can be determined and then the remainder of the isocyanate-reactive-component can be added in an amount that is essentially equivalent to the number of isocyanate groups remaining.

The polyisocyanate addition compounds have a content of ethylenically unsaturated groups (calculated as C=C, MW 24) of 2 to 40% by weight, preferably 2 to 20% by weight, and more preferably 2 to 10% by weight, based on the weight of the polyisocyanate addition compounds.

Prior to their use in the coating compositions curable by free radical polymerization, the polyisocyanate addition compounds according to the invention may be blended with other known polyaddition compounds containing ethylenically unsaturated groups. The amount of the polyisocyanate addition compounds according to the invention that must be blended with these other polyisocyanate addition compounds is dependent upon the siloxane content of the polyisocyanate addition compounds according to the invention, the intended application of the resulting coating compositions and the amount of low surface energy properties which are desired for this application.

To obtain low surface energy properties the resulting blends of polyisocyanate addition compounds should contain a minimum of 0.002% by weight, preferably 0.02% by weight and more preferably 0.2% by weight, of siloxane groups (MW 44), based on solids, and a maximum of 10% by weight, preferably 7% by weight and more preferably 3% by weight of siloxane groups (MW 44), based on solids. While siloxane contents of greater that 10% by weight are also suitable for providing low surface energy coatings, there are no further improvements to be obtained by using higher quantities. By knowing the siloxane content of the polyisocyanate addition compounds according to the invention and the desired siloxane "Content of the resulting blends, the relative amounts of the polylsocyanate addition compounds according to the invention and other polyisocyanate addition compounds may be readily determined.

In accordance with the present invention any of the polyisocyanate addition compounds according to the invention can be blended with the other polyisocyanates addition compounds, provided that the resulting blends have the minimum siloxane content required for the polyisocyanate addition compounds of the present invention. However, the polyisocyanate addition compounds to be blended preferably have a minimum siloxane content of 5% by weight, more preferably 10% by weight, and preferably have a maximum siloxane content of 50% by weight, more preferably 40% by weight and most preferably 30% by weight. These so-called "concentrates," may then be blended with the other polyisocyanate addition compounds to form blends that may be used to prepare coatings having low surface energy characteristics.

Several advantages are obtained by preparing concentrates with high siloxane contents and subsequently blending them with non-slioxane-containing polyisocyanate addition compounds. Initially, it is possible to convert many products to low surface energy polyisocyanate addition compounds while only producing one concentrate. By forming such low surface energy polyisocyanate addition compounds by blending commercially available polyisocyanate addition compounds with concentrates, it is not necessary to separately prepare each of the products in both a silxoane-containing and a non-siloxane-containing form. One possible disadvantage of the highest siloxane contents is that all of the isocyanate groups of a small portion of the starting polyisocyanate may be reacted. These molecules that do not contain isocyanate groups cannot be reacted with the ethylenically unsaturated compounds and, thus, cannot be incorporated into the resulting coating, which may adversely affect the properties of the final coating.

The polyisocyanate addition compounds according to the invention may also be used in water borne coating compositions. To be useful in these compositions the polylsocyanate addition compounds may be rendered hydrophilic either by blending with external emulsifiers or by chemically incorporating compounds containing cationic, anionic or nonionic groups. The reaction with the hydrophiliccompound may be carried out either before, during or after the allophanatization reaction to incorporate the siloxane-containing compound. Methods for rendering the polyisocyanates hydrophilic are disclosed in U.S. Patents 5,194,487 and 5,200,489, the disclosures of which are herein incorporated by reference. The reduced surface tensions of the modified polylsocyanate addition compounds enhance pigment dispersion and substrate wetting.

In addition to the polyisocyanate addition compounds according to the invention, the coating compositions may also contain known additives. Examples of these additives include wetting agents, flow control agents, antiskinning agents, antifoaming agents, matting agents, (such as silica, aluminum silicates and high-boiling waxes), viscosity regulators, pigments (including both organic and inorganic pigments), dyes, UV absorbers and stabilizers against thermal and oxidative degradation.

Other additives include copolymerizable monomers and inert organic solvents, preferably copolymerizable monomers. Suitable copolymerizable monomers are selected from organic compounds which contain 1 to 4, preferably 2 to 4, ethylenically unsaturated groups, and preferably have a viscosity of not more than 1000, more preferably not more than 500 mPa.s at 23°C, such as di- and poly(meth)acrylates of glycols having 2 to 6 carbon atoms and polyols having 3 to 4 hydroxyl groups and 3 to 6 carbon atoms.

Examples include ethylene glycol diacrylate, propane 1,3-diol diacrylate, butane 1,4-diol diacrylate, hexane 1,6-diol diacrylate, trimethylol-propane triacrylate, pentaerythritol tri- and tetraacrylate, and the corresponding methacrylates. Also suitable are di(meth)acrylates of polyether glycols of initiated with ethylene glycol, propane 1,3-diol, butane 1,4-diol; triacrylates of the reaction products of 1 mole of trimethylolpropane with 2.5 to 5 moles of ethylene oxide and/or propylene oxide; and tri- and tetraacrylates of the reaction products of 1 mole of pentaerythritol with 3 to 6 moles of ethylene oxide and/or propylene oxide. Other copolymerizable monomers include aromatic vinyl compounds such as styrene; vinyl alkyl ethers such as vinylbutyl ether or triethylene glycol divinyl ether; and allyl compounds such as triallylisocyanurate. Preferably, the copolymerizable monomers have functionalities of two or more.

Examples of suitable solvents include those known from polyurethane coating technology such as toluene, xylene, cyclohexane, butyl acetate, ethyl acetate, ethyl glycol acetate, methoxypropyl acetate (MPA), acetone, methyl ethyl ketone and mixtures thereof. Low molecular weight alcohols may also be used, but they should preferably be added after all of the isocyanate groups have been reacted.

The copolymerizable monomers are present in a maximum total amount of about 100% by weight, preferably about 60% by weight and more preferably about 40% by weight, based on the total weight of the polyisocyanate addition compounds. The organic solvents are present in a maximum total amount of about 150% by weight, preferably about 100% by weight and more preferably about 50% by weight, based on the total weight of the polyisocyanate addition compounds. When one or more of these diluents is present the minimum combined amount of the copolymerizable monomer and the organic solvent is at least about 10% by weight, preferably at least about 15% by weight and more preferably at least about 20% by weight, based on the total weight of the polyisocyanate addition compounds.

The coating compositions may be used to coat substrates of any kind, such as wood, plastics, leather, paper, textiles, glass, ceramics, plaster, masonry, metals and concrete. They may be applied by standard methods, such as spray coating, spread coating, flood coating, casting, dip coating, roll coating. The coating compositions may be clear or pigmented lacquers.

After the optional evaporation of a portion or all of any inert solvents used, the coatings may be crosslinked by free radical polymerization by using high energy radiation; low energy radiation (preferably having a wavelength of at least 320nm, more preferably about 320 to 500nm), such as UV or visible light; electron beams; γ rays; mercury, xenon, halogen or carbon arc lamps; sunlight; radioactive sources; by heating to elevated temperatures in the presence of peroxides or azo compounds; or by curing with metal salts of siccative acids and optionally (hydro)peroxides at either elevated temperatures or at temperatures of room temperature or below.

When the coating compositions are crosslinked by UV irradiation, photoinitiators are added to the coating composition. Suitable photoinitiators are known and include those described in the book by J. Korsar entitled "Light-Sensitive Systems", J. Wiley & Sons, New York - London - Sydney, 1976, and in Houben-Weyl, Methoden der Organischen Chemie, Volume E 20, page 80 et seq, Georg Thieme Verlag, Stuttgart, 1987.

Particularly suitable photoinitiators include benzoin ethers such as benzoin isopropyl ether, benzil ketals such as benzil dimethylketal, and hydroxyalkyl phenones such as 1-phenyl-2-hydroxy-2-methylpropan-1-one. The photoinitiators may be added in amounts, depending upon the application, of 0.1 to 10%, preferably 0.1 to 5% by weight, based on the weight of the ethylenically unsaturated polyurethanes and any other copolymerizable monomers. The photoinitiators may be added individually or may be used as mixtures to obtain advantageous synergistic effects.

To cure the coating compositions at elevated temperatures, curing must be conducted in the presence of 0.1 to 10%, preferably 0.1 to 5% by weight, based on the weight of the ethylenically unsaturated polyurethanes, of initiators such as peroxides or azo compounds. Temperatures of 80 to 240°C, preferably 120 to 160°C, are needed to cure the coating compositions at elevated temperatures.

Suitable initiators include the known free-radical initiators, e.g., aliphatic azo compounds such as azodlisobutyronitrile, azo-bis-2-methyl-valeronitrile, 1,1'-azo-bis-1-cyclohexanenitrile and alkyl 2,2'-azo-bis-isobutyrates; symmetrical diacyl peroxides such as acetyl, propionyl or butyryl peroxide, benzoyl peroxides substituted by bromo, nitro, methyl or methoxy groups, and lauryl peroxides; symmetrical peroxydicarbonates such as diethyl, diisopropyl, dicyclohexyl and dibenzoyl peroxydicarbonate; tert-butyl peroxy-2-ethylhexanoate and tert-butyl perbenzoate; hydroperoxides such as tert-butyl hydroperoxide and cumene hydroperoxide; and dialkyl peroxides such as dicumyl peroxide, tert-butyl cumyl peroxide or ditert-butyl peroxide.

The coating compositions according to the invention may also be cured at room temperature in the presence of siccatives and optionally (hydro)peroxides, provided that a portion of the isocyanate groups have been reacted with β,γ-ethylenically unsaturated ether alcohols. Acryloyl groups cannot be cured by this method; however, once the allyl ether groups have been initiated, they can react with the (meth)acryloyl groups.

Suitable siccatives are known and include metal salts, preferably cobalt or vanadium salts, of acids such as linseed oil fatty acids, tall oil fatty acids and soybean oil fatty acids; resinic acids such as abietic acid and naphthenic acid; acetic acid; isooctanoic acid; and inorganic acids such as hydrochloric acid and sulfuric acid. Cobalt and vanadium compounds which are soluble in the coating compositions and act as siccatives are particularly suitable and include salts of the acids mentioned above and also commercial products such as "Vanadiumbeschleuniger VN-2 (Vanadium Accelerator VN-2)" marketed by Akzo. The siccatives are generally used in the form of organic solutions in quantities such that the metal content is 0.0005 to 1.0% by weight, preferably 0.001 to 0.5% by weight, based on the weight of the ethylenically unsaturated polyurethanes.

Examples of (hydro)peroxides include di-tert.-butyl peroxide, benzoyl peroxide, cyclohexanone peroxide, methyl ethyl ketone peroxide, acetyl acetone peroxide, dinonyl peroxide, bis-(4-tert-butylcyclohexyl)-peroxy-dicarbonate, tert.-butyl hydroperoxide, cumene hydroperoxide, 2,5-dimethyl-hexane-2,5-hydroperoxide and diisopropyl benzene monohydroperoxide. The (hydro)peroxides are preferably used in quantities of 1 to 10% by weight, based on the weight of the ethylenically unsaturated polyurethanes.

When cured in the presence of cobalt and peroxides, the coating compositions generally cure over a period of 1 to 24 hours at 20°C to form high-quality coatings. However, curing may also take place at lower temperatures (for example =5°C) or more quickly at higher temperatures of up to 130°C.

The coating compositions containing the polyisocyanate addition compounds according to the invention provide coatings which have good dry times, adhere surprisingly well to a metallic base, and are particularly light-fast, color-stable in the presence of heat and very resistant to abrasion. They are also characterized by high hardiness, elasticity, very good resistance to chemicals, high gloss, good weather resistance, good environmental etch resistance.and good pigmenting qualities. Above all, the coating compositions have an excellent surface appearance and excellent cleanability.

The invention is further illustrated, but is not intended to be limited by the following examples.

### EXAMPLES

All of the amounts, parts and percentages set forth in the tables are by weight and based on resin solids unless otherwise specified.

### Siloxane Alcohol 0411

A butyl initiated, carbinol-terminated, polydimethylsiloxane alcohol having a molecular weight of about 1000 (available from Chisso Corp. as Silaplane FM-0411).

### Siloxane Alcohol 4411

A carbinol-terminated, polydimethylsiloxane diol having a molecular weight of about 1000 (available from Chisso Corp. as Silaplane FM-4411).

### Polylsocyanate 3400

An uretdione and isocyanurate group-containing polyisocyanate prepared from 1,6-hexamethylene diisocyanate and having an isocyanate content of 21.5%, a content of monomeric diisocyanate of <0.50%, a viscosity at 25°C of 200 mPa.s and a surface tension of 40 dynes/cm (available from Bayer Material Science as Desmodur N 3400).

### Polyisocyanate 3600

An isocyanurate group-containing polyisocyanate prepared from 1,6-hexamethylene diisocyanate and having an isocyanate content of 22.8%, a content of monomeric diisocyanate of <.0.25%, a viscosity at 25°C of 1145 mPa.s and a surface tension of 45 dynes/cm (available from Bayer Material Science as Desmodur N 3600).

### Polyisocyanate 2410

An isocyanurate and iminooxadiazine dione group-containing polyisocyanate prepared from 1,6-hexamethylene diisocyanate and having an isocyanate content of 23.6%, a content of monomeric diisocyanate of <0.30%, a viscosity at 25°C of 640 mPa.s and a surface tension of 40 dynes/cm (available from Bayer Material Science as Desmodur XP 2410).

### Polyisocyanate 4470

An isocyanurate group-containing polyisocyanate prepared from isophorone diisocyanate, and having an isocyanate content of 11.9%, a content of monomeric diisocyanate of <0.50%, a viscosity at 25°C of 670 mPa.s and a surface tension of 40 dynes/cm (available from Bayer Material Science as Desmodur Z 4470 BA). All of the preceding properties of the polyisocyanate were determined as a 70% solution in n-butyl acetate.

### Acrylate M 100

A poly(ε-caprolactone) ester of 2-hydroxyethyl acrylate (Tone M 100, available from Dow Chemicals, hydroxyl equivalent weight - 344)

### Acrylate Diluent 2513

Into a three liter round bottom flask fitted with stirrer, heater, dropping funnel and oxygen inlet tube were added 72.7 g (0.815 eq) of Polyisocyanate 3600, 280.5 g (0.815 eq) of Acrylate M 100 and 1.8 g of butylated hydroxy toluene stabilizer. The mixture was agitated until homogenous and then 0.06 g of dibutyltin dilaurate catalyst were added. The reaction mixture was then heated to 65°C and held at this temperature for six hours until no isocyanate was seen in an IR spectrum. The resulting polyurethane had a viscosity of 22,000 mPa·s at 65°C and 100% solids.

### Acrylate Diluent 238

1,6-hexanediol diacrylate (SR238, available from Sartomer)

### Acrylate Diluent 256

2-(2-ethoxy)ethyl acrylate (SR256, available from Sartomer)

### Photoinitiator 184

1-Hydroxycyclohexyl phenyl ketone photoinitiator (Irgacure 184, available from Ciba Specialty Chemicals.

### Surface tension of liquid samples

The Wilhelmy pilate technique (flamed glass slides) was used to Determine surface tension. Samples were analyzed with a Cahn DCA 312 dynamic contact angle analyzer. All samples were stirred prior to analysis.

### Surface energy of film samples

Advancing angles of water and methylene iodide, polar and non-polar solvents respectively, were measured using a Rame-Hart goniometer. Total solid surface energies, including the polar and dispersive components, were calculated using the advancing angles according to the Owens Wendt procedure.

### Example 1 - Preparation of Polyisocyanate 1 containing urethane groups and siloxane groups

495 g (2.68eq, based on actual titrated value) of Polyisocyanate 3600 and 5 g (0.005 eq) of Siloxane Alcohol 0411 were charged to a 1 L, 3-neck round bottom flask equipped with mechanical stirring, a cold water condenser, heating mantle, and N₂ inlet. The reaction was stirred and heated to 80°C. After cooking for 3 hours, the NCO content reached 22.31%, just slightly lower than the theoretical value of 22.50%. The heat was removed and a cold water/ice bath was applied. The resulting product had a viscosity of 1195 mPa.s @ 25°C and the surface tension of the liquid was 22.9 dynes/cm.

### Examples 2-9 - Preparation of Polyisocyanates 2-9 containing urethane groups and siloxane groups

Other polyisocyanates were prepared in a similar fashion to Example 1 using different polyisocyanates and different types and amounts of slioxane alcohols. Isobutanol was used in comparison examples to show that the siloxane alcohol is needed to provide low surface tension. Comparison Example 4 and 5 use the same equivalents of alcohol as Examples 1 and 2, respectively. The details of Examples 1-9 are set forth in Table 1.

**TABLE 1**

| Example | 1 | 2 | 3 | 4 (Comp) | 5 (Comp) | 6 | 7 | 8 | 9 |
|---|---|---|---|---|---|---|---|---|---|
| Starting Polyisocyanate | 3600 | 3600 | 3600 | 3600 | 3600 | 3400 | 2410 | 4470 | 4470 |
| Alcohol | 0411 | 0411 | 4411 | iButanol | ibutanol | 0411 | 0411 | 0411 | D411 |
| wt% -OH | 1 | 10 | 1 | 0.1 | 0.8 | 1 | 1 | 1 | 10 |
| Eq% -OH | 0.2 | 1.9 | 04 | 0.2 | 1.9 | 0.2 | 0.2 | 0.3 | 2.7 |
| % NCO | 22.3 | 198 | 22.5 | 22.8 | 22.1 | 21.3 | 23.3 | 17.0 | 15.1 |
| % SiO | 0.5 | 4.6 | 0.5 | 0.0 | 0.0 | 0.5 | 0.5 | 0.5 | 48 |
| Viscosity, mPa.s@25 | 1195 | 1310 | 1218 | 1242 | 1353 | 136 | 670 | 510 | 598 |
| surface tension, dynes/cm | 23 | 23 | 25 | 45 | 44 | 23 | 23 | 27 | 24 |

### Example 10 - Preparation of Polyisocyanate Addition Compound 1 - According to the Invention

250g (1.33 eq) of Polyisocyanate 1 were charged to a 1 L, 3-neck, round bottom flask equipped with mechanical stirring, a cold water condenser, heating mantle, and dry air sparge. This was heated to 60°C and 3.56g of BHT were added before 457g (1.33 eq) of Acrylate M 100 were charged through an addition funnel. When the addition of Acrylate M 100 was complete, 0.06g of dibutyl tin dilaurate was added. The temperature was maintained at 60°C After 12 hours, no NCO peak was evident by IR. The viscosity was 21,335 mPa.s @ 25°C. The surface tension of the liquid was 23.6 dynes/cm.

### Examples 11-18 - Preparation of Polyisocyanate Addition Compounds 11-18 - According to the invention

Other polysocyanate addition compounds were prepared in a similar manner to Example 10 using different polylsocyanates containing urethane groups and siloxane groups. The details of Examples 10-18 are set forth in Table 2.

**TABLE 2**

| Example | 10 | 11 | 12 | 13 (Comp) | 14 (Comp) | 15 | 16 | 17 | 18 |
|---|---|---|---|---|---|---|---|---|---|
| Polyisocyanate from Example | 1 | 2 | 3 | 4 | 5 | 6 | 7 | 8 | 9 |
| Starting Polyisocyanate | 3600 | 3600 | 3600 | 3600 | 3600 | 3400 | 2410 | 4470 | 4470 |
| Alcohol | 0411 | 0411 | 4411 | iButanol | iButanol | 0411 | 0411 | 0411 | 0411 |
| Equivalents of Polyisocyanate | 1 | 1 | 1 | 1 | 1 | 1 | 1 | 1 | 1 |
| Equivalents of Acrylate M 100 | 1 | 1 | 1 | 1 | 1 | 1 | 1 | 1 | 1 |
| % SiO in Polyisocyanate Addition compound | 0.2 | 1.8 | 0.2 | 0.0 | 0.0 | 0.2 | 0.2 | 0.2 | 2.2 |
| % C=C in Polyisocyanate Addition Compound | 4.5 | 4.3 | 4.5 | 4.6 | 4.5 | 4.4 | 4.6 | 4.1 | 3.9 |
| Viscosity, mPa.s@25 | 21,335 | 18,228 | 14,277 | 20,734 | 18,534 | 6,980 | 19,895 | 15,012 | 59,324 |
| Surface tension, dynes/cm | 24 | 22 | 26 | 44 | 44 | 23 | 24 | 22 | 18 |

These examples demonstrate that it is possible to prepare polysocyanate addition compounds according to the invention with low surface tension. Comparison Examples 13 and 14 demonstrate that prepanng polyisocyanate addition compounds from unmodified, siloxane-free polyisocyanates did not change the high surface tension.

### Examples 19-24 - Use of Polyisocyanate Addition Compounds as Concentrates

1 g of the polyisocyanate addition compounds set forth in Table 3 were mixed by hand with 9 g of an acrylate diluent, i.e., an unmodified siloxane-free polyisocyanate addition compound containing ethylenically unsaturated groups. The resulting mixtures of polyisocyanate addition compounds possessed low surface tension values, which demonstrate that the polyisocyanate addition compounds according to the invention could be used as concentrates for diluting acrylate diluents. The details of Examples 19-24 are set forth in Table 3.

**TABLE 3**

| Example | 19 | 20 | 21 (Comp) | 22 (Comp) | 23 | 24 |
|---|---|---|---|---|---|---|
| Polyisocyanate Addition Compound from Example | 10 | 11 | 13 | 14 | 11 | 11 |
| Starting Polyisocyanate | 3600 | 3600 | 3600 | 3600 | 3600 | 3600 |
| Alcohol | 0411 | 0411 | iButanol | iButanol | 0411 | 0411 |
| Polyisocyanate Addition Compound, g | 1 | 1 | 1 | 1 | 1 | 1 |
| Acrylate Diluent | 2513 | 2513 | 2513 | 2513 | 238 | 256 |
| Weight, g | 9 | 9 | 9 | 9 | 9 | 9 |
| % SiO of Blend | 0.02 | 02 | 0.0 | 0.0 | 0.2 | 0.2 |
| % C=C of Blend | 4.6 | 4.6 | 4.6 | 4.6 | 19.5 | 12.0 |
| Surface tension, dynes/cm | 26 | 23 | 44 | 45 | 23 | 23 |

These examples demonstrate that the polylsocyanate addition compounds according to the invention can be diluted with unmodified acrylate diluents, which did not contain siloxane groups, and still provide low surface tension. Dilution of the comparison polyisocyanate addition compounds from Examples 13 and 14 with the same unmodified acrylate diluents did not change the high surface tension.

### Examples 25-37 - Preparation of Coating Compositions Curabte by Free Radical Polymerization

Coating compositions curable by free radical polymerization were prepared by diluting the polyisocyanate addition compounds set forth in Table 4 with a 50/50 w/w solvent blend of butyl acetate and xylene to approximately 200 mPa.s and adding 3 parts by weight of Photoinitiator 184, based on solids. A 6-mil drawdown bar was used to draw coatings on cold roll unpolished steel panels. The coatings were flashed for 10 minutes and cured in the UV fusion System under 100% lamp intensity at 20 rpm belt speed to provide clear films. The details of Examples 25-39 are set forth in Table 4.

**TABLE 4**

| Example | 25 | 26 | 27 | 28 (Comp) | 29 (Comp) | 30 | 31 | 32 | 33 | 34 | 35 | 36 (Comp) | 37 (Comp) |
|---|---|---|---|---|---|---|---|---|---|---|---|---|---|
| Polyisocyanate Addition Compound from Example | 10 | 11 | 12 | 13 | 14 | 15 | 16 | 17 | 18 | 19 | 20 | 21 | 22 |
| Starting Polyisocyanate | 3600 | 3500 | 3600 | 3600 | 3600 | 3400 | 2410 | 4470 | 4470 | 3600 | 3600 | 3600 | 3600 |
| Alcohol | 0411 | 0411 | 4411 | iButanol | iButanol | 0411 | 0411 | 0411 | 0411 | 0411 | 0411 | iButanol | ibutanol |
| Polyisocyanate Addition Compound, g | 17.0 | 12.0 | 11.0 | 11.4 | 12.4 | 14.5 | 12.0 | 14.0 | 15.8 | 11.6 | 10.3 | 12.1 | 11.3 |
| Solvent Blend, g | 7.3 | 5.14 | 4.7 | 4.9 | 5.3 | 4.8 | 4.0 | 4.0 | 6.1 | 3.7 | 3.3 | 3.8 | 3.6 |
| % SiO in Poloyisocyanate Addition Compound | 0.2 | 1.8 | 0.2 | 0.0 | 00 | 02 | 02 | 0.2 | 22 | 002 | 02 | 0.0 | 0.0 |
| % C=C in Polyisocyanate Addition Compound | 4.5 | 423 | 425 | 4.6 | 4.5 | 4.4 | 4.6 | 4.1 | 3.9 | 4.6 | 4.6 | 4.6 | 4.6 |
| Surface energy, dynes/cm | 15 | 10 | 12 | 40 | 35 | 20 | 15 | 18 | 16 | 21 | 18 | 34 | 35 |

These examples demonstrate that the polyisocyanate addition compounds according to the invention, both those which were directly prepared and those which were prepared from concentrates, can be cured to provide clear coatings having a low surface energy. The comparison polyisocyanate addition compounds, which did not contain siloxane groups, regardless of whether they were directly prepared or prepared from concentrates, resulted in coatings having a high surface energy.

## Claims

1. Polyisocyanate addition compounds which
i) are substantially free from isocyanate groups and are prepared from one or more a) polyisocyanate adducts containing isocyanurate, uretdione, biuret, allophanate, iminooxadiazine dione carbodiimide and/or oxadiazinetrione groups and/or b) NCO prepolymers,
ii) contain urethane groups,
iii) contain siloxane groups (calculated as SiO, MW 44) in an amount of 0.002 to 50% by weight, and
iv) contain ethylenically unsaturated groups (calculated as C=C, MW 24) in an amount of 2 to 40% by weight,
wherein the preceding percentages are based on the solids content of the polyisocyanate addition compounds and wherein the siloxane groups are incorporated by reacting an isocyanate group with a compound containing one or more hydroxyl groups directly attached to a carbon atom and one or more siloxane groups to form urethane groups and optionally allophanate groups, provided that more than 50 mole % of the groups that chemically incorporate siloxane groups into the polyisocyanate addition compounds are urethane groups.

2. The polyisocyanate addition compounds of Claim 1 wherein the siloxane groups are incorporated by reacting an isocyanate group with a compound containing one hydroxyl group directly attached to a carbon atom and one or more siloxane groups.

3. The polyisocyanate addition compounds of Claim 1 wherein said polyisocyanate addition compounds are prepared from one or more polyisocyanate adducts comprising an isocyanurate group-containing polyisocyanate prepared from 1,6-hexamethylene diisocyanate or isophorone diisocyanate.

4. The polyisocyanate addition compounds of Claim 2 wherein said polyisocyanate addition compounds are prepared from one or more polyisocyanate adducts comprising an isocyanurate group-containing polyisocyanate prepared from 1,6-hexamethylene diisocyanate or isophorone diisocyanate.

5. The polyisocyanate addition compounds of Claim 1 wherein at least a portion of said ethylenically unsaturated groups are incorporated by reacting an isocyanate group with a hydroxyalkyl (meth)acrylate or the reaction product of (meth)acrylic acid with ε-caprolactone.

6. The polyisocyanate addition compounds of Claim 2 wherein at least a portion of said ethylenically unsaturated groups are incorporated by reacting an isocyanate group with a hydroxyalkyl (meth)acrylate or the reaction product of (meth)acrylic acid with ε-caprolactone.

7. The polyisocyanate addition compounds of Claim 3 wherein at least a portion of said ethylenically unsaturated groups are incorporated by reacting an isocyanate group with a hydroxyalkyl (meth)acrylate or the reaction product of (meth)acrylic acid with ε-caprolactone.

8. The polyisocyanate addition compounds of Claim 4 wherein at least a portion of said ethylenically unsaturated groups are incorporated by reacting an isocyanate group with a hydroxyalkyl (meth)acrylate or the reaction product of (meth)acrylic acid with ε-caprolactone.

9. The polyisocyanate addition compounds of Claim 1 wherein the polyisocyanate addition compounds contain 0.02 to 10% by weight, based on solids, of siloxane groups and 2 to 20% by weight of ethylenically unsaturated groups.

10. The polyisocyanate addition compounds of Claim 2 wherein the polyisocyanate addition compounds contain 0.02 to 10% by weight, based on solids, of siloxane groups and 2 to 20% by weight of ethylenically unsaturated groups.

11. The polyisocyanate addition compounds of Claim 3 wherein the polyisocyanate addition compounds contain 0.02 to 10% by weight, based on solids, of siloxane groups and 2 to 20% by weight of ethylenically unsaturated groups.

12. The polyisocyanate addition compounds of Claim 4 wherein the polyisocyanate addition compounds contain 0.02 to 10% by weight, based on solids, of siloxane groups and 2 to 20% by weight of Ethylenically unsaturated groups.

13. The polyisocyanate addition compounds of Claim 5 wherein the polyisocyanate addition compounds contain 0.02 to 10% by weight, based on solids, of siloxane groups and 2 to 20% by weight of ethylenically unsaturated groups.

14. The polyisocyanate addition compounds of Claim 6 wherein the polyisocyanate addition compounds contain 0.02 to 10% by weight, based on solids, of siloxane groups and 2 to 20% by weight of ethylenically unsaturated groups.

15. The polyisocyanate addition compounds of Claim 7 wherein the polyisocyanate addition compounds contain 0.02 to 10% by weight, based on solids, of siloxane groups and 2 to 20% by weight of ethylenically unsaturated groups.

16. The polyisocyanate addition compounds of Claim 8 whereon the polyisocyanate addition compounds contain 0.02 to 10% by weight, based on solids, of siloxane groups and 2 to 20% by weight of ethylenically unsaturated groups.

17. A coating composition which is curable by free radical polymerization and contains the polyisocyanate addition compounds of Claim 1.

## Patentansprüche

1. Polyisocyanat-Additionsverbindungen, die
i) im Wesentlichen frei sind von Isocyanatgruppen und aus einem oder mehreren von a) Polyisocyanataddukten, die Isocyanurat-, Uretdion-, Biuret-, Allophanat-, Iminooxadiazindioncarbodiimid- und/oder Oxadiazintriongruppen enthalten, und/oder b) NCO-Präpolymeren hergestellt werden,
ii) Urethangruppen enthalten,
iii) Siloxangruppen (berechnet als SiO, MW 44) in einer Menge von 0,002 bis 50 Gew. % enthalten und
iv) ethylenisch ungesättigte Gruppen (berechnet als C=C, MW 24) in einer Menge von 2 bis 40 Gew.-% enthalten,
wobei die vorstehenden Prozentsätze auf dem Feststoffgehalt der Polyisocyanat-Additions-verbindungen basieren und wobei die Siloxangruppen durch Umsetzen einer Isocyanatgruppe mit einer Verbindung, die eine oder mehrere Hydroxylgruppen, die direkt an ein Kohlenstoffatom angelagert sind, und eine oder mehre Siloxangruppen enthält, unter Bildung von Urethangruppen und gegebenenfalls Allophanatgruppen inkorporiert werden, vorausgesetzt, dass mehr als 50 mol-% der Gruppen, die chemisch Siloxangruppen in die Polyisocyanat-Additionsverbindungen inkorporieren, Urethangruppen sind.

2. Polyisocyanat-Additionsverbindungen nach Anspruch 1, wobei die Siloxangruppen durch Umsetzen einer Isocyanatgruppe mit einer Verbindung, die eine Hydroxygruppe, die direkt an ein Kohlenstoffatom angelagert ist, und eine oder mehrere Siloxangruppen enthält, inkorporiert werden.

3. Polyisocyanat-Additionsverbindungen nach Anspruch 1, wobei die Polyisocyanat-Additionsverbindungen aus einem oder mehreren Polyisocyanataddukten hergestellt werden, die ein Isocyanuratgruppen enthaltendes Polyisocyanat umfassen, das aus 1,6-Hexamethylendiisocyanat oder Isophorondiisocyanat hergestellt wurde.

4. Polyisocyanat-Additionsverbindungen nach Anspruch 2, wobei die Polyisocyanat-Additionsverbindungen aus einem oder mehreren Polyisocyanataddukten hergestellt werden, die ein Isocyanuratgruppen enthaltendes Polyisocyanat umfassen, das aus 1,6-Hexamethylendiisocyanat oder Isophorondiisocyanat hergestellt wurde.

5. Polyisocyanat-Additionsverbindungen nach Anspruch 1, wobei zumindest ein Teil der ethylenisch ungesättigten Gruppen durch Umsetzen einer Isocyanatgruppe mit einem Hydroxyalkyl(meth)acrylat oder dem Reaktionsprodukt von (Meth)acrylsäure mit ε-Caprolacton inkorporiert wird.

6. Polyisocyanat-Additionsverbindungen nach Anspruch 2, wobei zumindest ein Teil der ethylenisch ungesättigten Gruppen durch Umsetzen einer Isocyanatgruppe mit einem Hydroxyalkyl(meth)acrylat oder dem Reaktionsprodukt von (Meth)acrylsäure mit ε-Caprolacton inkorporiert wird.

7. Polyisocyanat-Additionsverbindungen nach Anspruch 3, wobei zumindest ein Teil der ethylenisch ungesättigten Gruppen durch Umsetzen einer Isocyanatgruppe mit einem Hydroxyalkyl(meth)acrylat oder dem Reaktionsprodukt von (Meth)acrylsäure mit ε-Caprolacton inkorporiert wird.

8. Polyisocyanat-Additionsverbindungen nach Anspruch 4, wobei zumindest ein Teil der ethylenisch ungesättigten Gruppen durch Umsetzen einer Isocyanatgruppe mit einem Hydroxyalkyl(meth)acrylat oder dem Reaktionsprodukt von (Meth)acrylsäure mit ε-Caprolacton inkorporiert wird.

9. Polyisocyanat-Additionsverbindungen nach Anspruch 1, wobei die Polyisocyanat-Additionsverbindungen 0,02 bis 10 Gew.-%, basierend auf den Feststoffen, Siloxangruppen und 2 bis 20 Gew.-% ethylenisch ungesättigte Gruppen enthalten.

10. Polyisocyanat-Additionsverbindungen nach Anspruch 2, wobei die Polyisocyanat-Additionsverbindungen 0,02 bis 10 Gew,-%, basierend auf den Feststoffen, Siloxangruppen und 2 bis 20 Gew.-% ethylenisch ungesättigte Gruppen enthalten.

11. Polyisocyanat-Additionsverbindungen nach Anspruch 3, wobei die Polyisocyanat-Additionsverbindungen 0,02 bis 10 Gew.-%, basierend auf den Feststoffen, Siloxangruppen und 2 bis 20 Gew.-% ethylenisch ungesättigte Gruppen enthalten.

12. Polyisocyanat-Additionsverbindungen nach Anspruch 4, wobei die Polyisocyanat-Additionsverbindungen 0,02 bis 10 Gew.-%, basierend auf den Feststoffen, Siloxangruppen und 2 bis 20 Gew.-% ethylenisch ungesättigte Gruppen enthalten.

13. Polyisocyanat-Additionsverbindungen nach Anspruch 5, wobei die Polyisocyanat-Additionsverbindungen 0,02 bis 10 Gew.-%, basierend auf den Feststoffen, Siloxangruppen und 2 bis 20 Gew.-% ethylenisch ungesättigte Gruppen enthalten.

14. Polyisocyanat-Additionsverbindungen nach Anspruch 6, wobei die Polyisocyanat-Additionsverbindungen 0,02 bis 10 Gew.-%, basierend auf den Feststoffen, Siloxangruppen und 2 bis 20 Gew.-% ethylenisch ungesättigte Gruppen enthalten.

15. Polyisocyanat-Additionsverbindungen nach Anspruch 7, wobei die Polyisocyanat-Additionsverbindungen 0,02 bis 10 Gew.-%, basierend auf den Feststoffen, Siloxangruppen und 2 bis 20 Gew.-% ethylenisch ungesättigte Gruppen enthalten.

16. Polyisocyanat-Additionsverbindungen nach Anspruch 8, wobei die Polyisocyanat-Additionsverbindungen 0,02 bis 10 Gew.-%, basierend auf den Feststoffen, Siloxangruppen und 2 bis 20 Gew.-% ethylenisch ungesättigte Gruppen enthalten.

17. Beschichtungszusammensetzung, die durch radikalische Polymerisation härtbar ist und die Polyisocyanat-Additionsverbindungen nach Anspruch 1 enthält.

## Revendications

1. Composés d'addition de polysocyanate qui
i) sont sensiblement dépourvus de groupes isocyanate et sont préparés à partir d'un ou plusieurs a) adduits de polyisocyanate contenant des groupes isocyanurate, urétdione, biuret, allophanate, iminooxadiazinedione, carbodiimide et/ou oxadiazinetrione et/ou b) prépolymères NCO,
ii) contiennent des groupes uréthane,
iii) contiennent des groupes siloxane (calculés en SiO, PM 44) dans une quantité de 0,002 à 50 % en poids, et
iv) contiennent des groupes éthyléniquement insaturés (calculés en C=C, PM 24) dans une quantité de 2 à 40 % en poids,
les pourcentages précédents étant basés sur la teneur en matières solides des composés d'addition de polyisocyanate, et les groupes siloxane étant incorporés en faisant réagir un groupe isocyanate avec un composé contenant un ou plusieurs groupes hydroxyle directement attachés à un atome de carbone et un ou plusieurs groupes siloxane pour former des groupes uréthane et éventuellement des groupes allophanate, à condition que plus de 50 % en moles des groupes qui incorporent chimiquement des groupes siloxane dans les composés d'addition de Polyisocyanate soient des groupes uréthane.

2. Composés d'addition de polysocyanate selon la revendication 1 dans lesquels les groupes siloxane sont incorporés en faisant réagir un groupe isocyanate avec un composé contenant un groupe hydroxyle directement attaché à un atome de carbone et un ou plusieurs groupes siloxane.

3. Composés d'addition de polysocyanate selon la revendication 1, lesdits composés d'addition de polyisocyanate étant préparés à partir d'un ou plusieurs adduits de polysocyanate comprenant un polysocyanate contenant des groupes isocyanurate préparé a partir de diisocyanate de 1,6-hexaméthylène ou de diisocyanate d'isophorone

4. Composés d'addition de polyisocyanate selon la revendication 2, lesdits composés d'addition de polyisocyanate étant préparés à partir d'un ou plusieurs adduits de polyisocyanate comprenant un polysocyanate contenant des groupes isocyanurate préparé à partir de diisocyanate de 1,6-hexaméthylène ou de diisocyanate d'isophorone.

5. Composés d'addition de polyisocyanate selon la revendication 1 dans lesquels au moins une partie desdits groupes éthyléniquement insaturés est incorporée en faisant réagir un groupe isocyanate avec un (méth)acrylate d'hydroxyalkyle ou le produit de réaction de l'acide (méth)acrylique avec l'ε-caprolactone.

6. Composés d'addition de polyisocyanate selon la revendication 2 dans lesquels au moins une partie desdits groupes éthyléniquement insaturés est incorporée en faisant réagir un groupe isocyanate avec un (méth)acrylate d'hydroxyalkyle ou le produit de réaction de l'acide (méth)acrylique avec l'ε-caprolactone.

7. Composés d'addition de polysocyanate selon la revendication 3 dans lesquels au moines une partie desdits groupes éthyléniquement insaturés est incorporée en faisant réagir un groupe isocyanate avec un (méth)acrylate d'hydroxyalkyle ou le produit de réaction de l'acide (méth)acrylique avec l'ε-caprolactone

8. Composés d'addition de polyisocyanate selon la revendication 4 dans lesquels au moins une partie desdits groupes ethyléniquement insaturés est incorporée en faisant réagir un groupe isocyanate avec un (méth)acrylate d'hydroxyalkyle ou le produit de réaction de l'acide (méth)acrylique avec l'ε-caprolactone

9. Composés d'addition de polysocyanate selon la revendication 1, les composés d'addition de polyisocyanate contenant 0,02 à 10 % en poids, rapporté aux matières solides, de groupes siloxane, et 2 à 20 % en poids de groupes ethyléniquement insaturés

10. Composés d'addition de polyisocyanate selon la revendication 2, les composes d'addition de polysocyanate contenant 0,02 à 10 % en poids, rapporté aux matières solides, de groupes siloxane, et 2 à 20 % en poids de groupes éthyléniquement insaturés.

11. Composés d'addition de polysocyanate selon la revendication 3, les composés d'addition de polysocyanate contenant 0,02 à 10 % en poids, rapporté aux matières solides, de groupes siloxane, et 2 à 20 % en poids de groupes éthyléniquement insaturés.

12. Composés d'addition de polyisocyanate selon la revendication 4, les composés d'addition de Polyisocyanate contenant 0,02 a 10 % en poids, rapporté aux matières solides, de groupes siloxane, et 2 à 20 % en poids de groupes éthyléniquement insaturés

13. Composés d'addition de polysocyanate selon la revendication 5, les composés d'addition de polyisocyanate contenant 0,02 à 10 % en poids, rapporté aux matières solides, de groupes siloxane, et 2 à 20 % en poids de groupes éthyléniquement insaturés

14. Composés d'addition de polyisocyanate selon la revendication 6, les composés d'addition de polyisocyanate contenant 0,02 à 10 % en poids, rapporté aux matières solides, de groupes siloxane, et 2 à 20 % en poids de groupes éthyléniquement insaturés.

15. Composés d'addition de polyisocyanate selon la revendication 7, les composés d'addition de polyisocyanate contenant 0,02 à 10 % en poids, rapporté aux matières solides, de groupes siloxane, et 2 à 20 % en poids de groupes éthyléniquement insaturés.

16. Composés d'addition de polyisocyanate selon la revendication 8, les composés d'addition de polyisocyanate contenant 0,02 à 10 % en poids, rapporté aux matières solides, de groupes siloxane, et 2 à 20 % en poids de groupes éthyléniquement insaturés.

17. Composition de revêtement qui est durcissable par polymérisation radicalaire et contient les composés d'addition de polyisocyanate de la revendication 1.
